(19) Europäisches Patentamt
European Patent Office
Office européen des brevets

(11) Publication number: **0 517 017 A2**

# (12) EUROPEAN PATENT APPLICATION

(21) Application number: **92108226.9**

(22) Date of filing: **15.05.92**

(51) Int. Cl.[5]: **C08L 71/10**, C08F 283/08, C08L 51/00

(30) Priority: **07.06.91 JP 162307/91**
**17.07.91 JP 176729/91**
**27.09.91 JP 249459/91**
**14.11.91 JP 325045/91**

(43) Date of publication of application:
**09.12.92 Bulletin 92/50**

(84) Designated Contracting States:
**DE FR GB IT NL**

(71) Applicant: **MITSUBISHI PETROCHEMICAL CO., LTD.**
**5-2, Marunouchi 2-chome**
**Chiyoda-ku Tokyo(JP)**

(72) Inventor: **Arashiro, Yusuke, c/o Mitsubishi Petrochem. Co.,**
**Limited, 1, Toho-cho**
**Yokkaichi-shi, Mie(JP)**
Inventor: **Tsukahara, Toru, c/o Mitsubishi Petrochem. Co.,**
**Limited, 1, Toho-cho**
**Yokkaichi-shi, Mie(JP)**
Inventor: **Nakano, Hiroshi, c/o Mitsubishi Petrochem. Co.,**
**Limited, 1, Toho-cho**
**Yokkaichi-shi, Mie(JP)**
Inventor: **Yamauchi, Shinichi, c/o Mitsubishi Petrochem. Co.,**
**Limited, 1, Toho-cho**
**Yokkaichi-shi, Mie(JP)**
Inventor: **Nishimura, Hiromi, c/o Mitsubishi Petrochem. Co.,**
**Limited, 1, Toho-cho**
**Yokkaichi-shi, Mie(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

## (54) Thermoplastic resin composition.

(57) A thermoplastic resin composition is disclosed, comprising (A) of a hydroxy-substituted poly(phenylene ether) resin comprising p units of a repeating unit represented by formula (I):

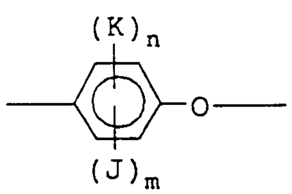

(I)

wherein m represents an integer of from 1 to 4; n represents an integer of from 0 to 3; the sum of m and n is not greater than 4; J represents $(HO)_a$-$R^1$-S-$R^2$-, wherein a represents an integer of from 1 to 6; $R^1$ represents a halogen-substituted or unsubstituted polyvalent aliphatic hydrocarbon group having from 1 to 20 carbon atoms which may contain an oxygen atom in the carbon chain thereof or a halogen-substituted or unsubstituted polyvalent aromatic hydrocarbon group; and $R^2$ represents an alkylene group having from 2 to 20 carbon atoms; when m is 2 or more, the plural J groups may be the same or different; K represents a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20

EP 0 517 017 A2

carbon atoms, an alkoxy group having from 1 to 20 carbon atoms, or a halohydrocarbonoxy group having from 1 to 20 carbon atoms; and when n is 2 or more, the plural K groups may be the same or different,
or a repeating unit represented by formula (VI):

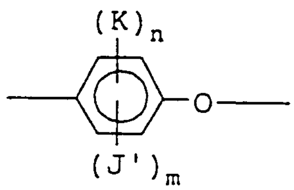

(VI)

wherein m, n, and K are as defined above; and J' represents $-R^3-(OH)_a$, wherein a represents an integer of from 1 to 6, and $R^3$ represents a polyvalent aliphatic hydrocarbon group having from 1 to 20 carbon atoms which may contain an oxygen atom in the carbon chain thereof and may have a substituent on the side chain thereof or a polyvalent aromatic hydrocarbon group; when m is 2 or more, the plural J' groups may be the same or different, and q units of a repeating unit represented by formula (II):

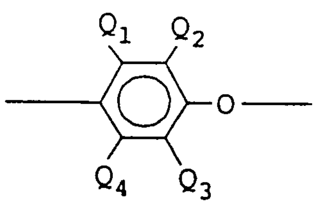

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, and having a number average degree of polymerization (p + q) of from 25 to 400, with p and q satisfying formula:

$$0.2 \leqq 100p/(p + q) \leqq 100$$

and (B) an olefin resin having a functional group selected from a carboxyl group and a silyl group.

The composition, in which functional group in component (A) and that of component (B) react to form a polymer alloy with excellent compatibility, provides a molded article excellent in mechanical strength, particularly impact strength and is useful in broadened range of application, such as automobile parts and electrical parts.

## FIELD OF THE INVENTION

This invention relates to a thermoplastic resin composition with excellent moldability. More particularly, it relates to an engineering plastic comprising (A) a hydroxy-substituted poly(phenylene ether) resin and (B) a functionalized olefin resin. Molded articles obtained from the composition are excellent in solvent resistance and thermal rigidity. Accordingly, the resin composition of the present invention is suited for use in automobile parts and electrical parts, e.g., connectors, ignition manifolds, coil sealants, gears, cranks, etc.

## BACKGROUND OF THE INVENTION

Polyphenylene ether resins (hereinafter referred to as PPE) are known as engineering plastics having excellent heat-resistance, dimensional stability, non-hygroscopicity, and electrical properties. However, this resin has a high melt viscosity due to its high glass transition point resulting in poor moldability such as injection or extrusion and poor solvent resistance and impact resistance for use as engineering plastic. To overcome these disadvantages, it has been proposed to blend other resins with PPE. For example, U.S. Patent 3,383,435 suggests to blend a styrene resin or a high-impact polystyrene (HIPS) with PPE to improve moldability, but the problem of poor solvent resistance is still unmitigated.

It has also been proposed to blend PPE with an olefin resin having an excellent solvent resistance as described in JP-B-42-7069 (the term "JP-B" as used herein means an "examined published Japanese patent application"). However, a compatibility between these two resins is poor, so a molded articles from the polymer blends are short of levels of mechanical strength as demanded in the field of industrial materials. It has been suggested to use a compatibilizer for improving compatibility of PPE and olefin resins, such as a styrene-butadiene block copolymer or a hydrogenation product thereof, as disclosed in JP-A-53-71158, JP-A-54-88960, and JP-A-59-100159 (the term "JP-A" as used herein means an "unexamined published Japanese patent application"). However, since the amount of the olefin resin to be blended is limited on the ground of the compatibility, the solvent resistance possessed by the olefin resin cannot be fully manifested in the article.

JP-A-58-103557 and JP-A-60-76547 disclose resin compositions containing PPE and a considerably large proportion of an olefin resin to improve tensile characteristics and non-brittleness. However, a molded article therefrom does not satisfy sufficiently a required level of rigidity and heat resistance.

It is known to modify PPE by incorporating a functional group into the terminal phenolic hydroxyl group of PPE. For example, JP-A-63-199754 and JP-W-62-500456 (the term "JP-W" means an "unexamined published international patent application") disclose maleic anhydride-modified PPE, and U.S. Patent 4,744,708 discloses an alcoholic hydroxy-modified PPE. In these modified PPE, the number of the incorporated functional group is about one per molecule of phenolic hydroxy group of PPE at the most. It is insufficient for broadening the application of PPE.

If the functional group may be incorporated into the phenylene rings in the main chain, more than one functional groups would be present per PPE molecule. Such a modified PPE would have broadened application as a compatibilizer or a component of a resin composition to provide a molding material having improved performance properties.

On the other hand, for the purpose of incorporating a functional group, e.g., a carboxyl group, into less reactive olefin resins, it is well known to graft maleic anhydride, etc. to a propylene resin under radical reaction conditions to obtain a carboxyl-modified propylene resin as described, e.g., in JP-B-45-30945, KOBUNSHI KAGAKU (High Molecule Chemistry), Vol. 29, p. 265 (published by The Society of Polymer Science, Japan, 1972), JP-B-57-59216, and JP-A-57-105448. Similarly, JP-A-63-128021 and JP-A-63-130660 disclose resin compositions comprising a modified PPE having an aliphatic alcoholic hydroxyl group at the terminal and a maleic acid-grafted olefin resin and thereby exhibiting improved compatibility. These compositions using a modified olefin resin and/or a modified PPE, though showing some improvement in compatibility, still fail to attain satisfactory impact resistance and moldability for practical use.

It has thus been demanded to develop a resin composition in which disadvantages of PPE and olefin resins are compensated for by each other while retaining their own advantages. Such a resin composition as an engineering plastic would be used in various field. In order to provide a molding material possessing merits of both of these resins while offsetting the respective demerits, it is necessary to exploit excellent techniques for increasing interfacial affinity of two-phase structure of PPE and olefin resins, which essentially have poor compatibility with each other, to improve interfacial adhesion and also to form a uniform and fine texture comprising the two phases so as to prevent delamination or the like problem which is apt to occur under a shear stress on molding, such as injection molding.

## SUMMARY OF THE INVENTION

An object of the present invention is to provide a thermoplastic resin composition with excellent rigidity and impact strength which comprises a modifed PPE and a modified olefin resin in a uniformly and finely dispersed state with improved compatibility.

This object and effects of the present invention have been satisfied by the composition comprising (A) PPE having an arbitrary number of hydroxyl groups in the side chain, i.e., hydroxy-substituted poly-(phenylene ether), and (B) a carboxyl-or silyl-modified olefin resin. These resins exhibit extremely high compatibility with each other.

Namely, the present invention provides a thermoplastic resin composition comprising (A) from 10 to 90% by weight (based on the total amount of components (A) and (B)) of a hydroxy-substituted poly-(phenylene ether) resin comprising p units of a repeating unit represented by formula (I):

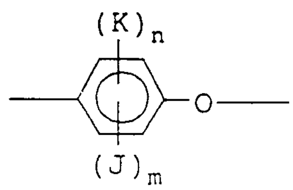

(I)

wherein m represents an integer of from 1 to 4; n represents an integer of from 0 to 3; the sum of m and n is not greater than 4; J represents $(HO)_a$-$R^1$-S-$R^2$-, wherein a represents an integer of from 1 to 6; $R^1$ represents a halogen-substituted or unsubstituted polyvalent aliphatic hydrocarbon group having from 1 to 20 carbon atoms which may contain an oxygen atom in the carbon chain thereof or a halogen-substituted or unsubstituted polyvalent aromatic hydrocarbon group; and $R^2$ represents an alkylene group having from 2 to 20 carbon atoms; when m is 2 or more, the plural J groups may be the same or different; K represents a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms; and when n is 2 or more, the plural K groups may be the same or different,
or a repeating unit represented by formula (VI):

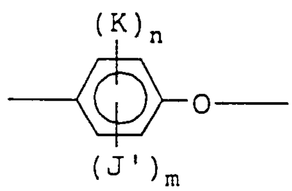

(VI)

wherein m, n, and K are as defined above; and J' represents $-R^3-(OH)_a$, wherein a represents an integer of from 1 to 6, and $R^3$ represents a polyvalent aliphatic hydrocarbon group having from 1 to 20 carbon atoms which may contain an oxygen atom in the carbon chain thereof and may have a substituent on the side chain thereof or a polyvalent aromatic hydrocarbon group; when m is 2 or more, the plural J' groups may be the same or different,
and g units of a repeating unit represented by formula (II):

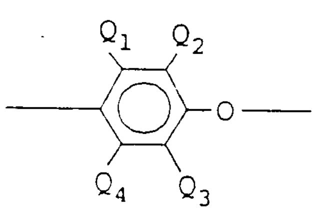

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, and having a number average degree of polymerization (p + q) of from 25 to 400, with p and q satisfying formula:

$$0.2 \leqq 100p/(p + q) \leqq 100$$

and (B) from 10 to 90% by weight (based on the total amount of components (A) and (B)) of an olefin resin having a functional group selected from a carboxyl group and a silyl group.

DETAILED DESCRIPTION OF THE INVENTION

The hydroxy-substituted poly(phenylene ether) resin (hereinafter abbreviated as PHPE) which can be used as component (A) is a PPE-based resin obtained by polymerizing from 0.2 to 100 mol% of at least one phenol derivative having a hydroxyl group, represented by formula (IX) or (X):

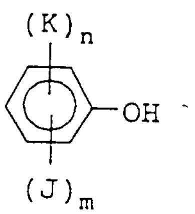

(IX)

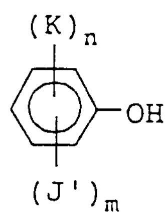

(X)

wherein m, n, J, K, and J' are as defined above, and 0 to 99.8 mol% of a phenol derivative represented by formula (XI):

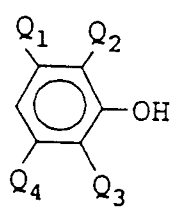

(XI)

wherein $Q^1$, $Q^2$, $Q^3$, and $Q^4$ are as defined above. The unit "mol%" as used herein means "percentage by mole based on the total amount of the phenol derivatives represented by formulae (IX), (X) and (XI)".

Among the possible examples of the hydroxyl-containing phenol derivative of formula (IX), preferred compounds are 2-[3-(2-hydroxyethylthio)propyl]6-methylphenol, 2-[3-(2,3-dihydroxypropylthio)propyl]-6-methylphenol, 2-[3-(2-hydroxypropylthio)propyl]-6-methylphenol, 2-[3-(2-hydroxy-1-methylpropylthio)propyl]-6-methylphenol, 2,6-bis[3-(2-hydroxyethylthio)propyl]phenol, 2-[3-(2-hydroxyethylthio)propyl]-6-ethylphenol, or 2-[3-(2-hydroxyethylthio)propyl]-6-phenylphenol. Especially preferred compound is 2-[3-(2-hydroxyethylthio)propyl]-6-methylphenol represented by formula:

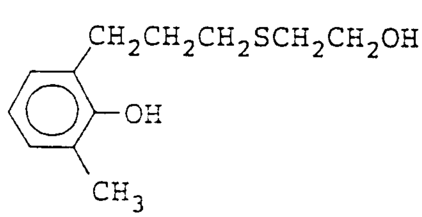

Suitable examples of the hydroxyl-containing phenol derivative of formula (X) are 2-(2-hydroxyethyl)-6-methylphenol, 2-(3-hydroxypropyl)-6-methylphenol, 2-(4-hydroxybutyl)-6-methylphenol, 2-(2-hydroxypropyl)-6-methylphenol, 2-(2,3-dihydroxypropyl)-6-methylphenol, 2-(3-hydroxy-2-methylpropyl)-6-methylphenol, or 2-(1-ethyl-2-hydroxyethyl)-6-methylphenol. Especially preferred compound is 2-(3-hydroxypropyl)-6-methylphenol represented by formula:

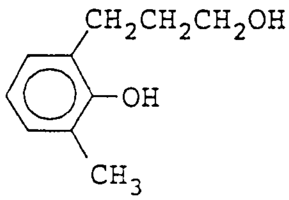

Examples of the phenol derivative of formula (XI) may include 2,6-dimethylphenol, 2,3,6-trimethylphenol, 2-methyl-6-ethylphenol, 2,6-dipropylphenol, 2-allyl-6-methylphenol, 2,6-benzylphenol, or 2-chlorophenol. Especially preferred compound is 2,6-dimethylphenol represented by formula:

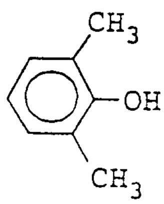

These phenol derivatives of formulae (IX), (X), and (XI) may be used either individually or in combination of two or more thereof.

PHPE can generally be prepared by conventional oxidative polymerization for obtaining known poly-(phenylene ether)s as described in U.S. Patents 3,422,062, 3,306,874, 3,306,875, 3,257,257, and 3,257,358. A suitable catalysts for the oxidative polymerization may include cuprous salt-amine, cupric salt-amine-alkali metal hydroxide, or manganese salt-amine.

PHPE to be used in the present invention includes homopolymers, random copolymers, and block copolymers. PHPE has a polymerization degree of from 25 to 400, and a number average molecular weight usually of from 3,000 to 50,000, and preferably from 5,000 to 30,000. If the degree of polymerization is less than 25, satisfactory mechanical characteristics cannot be obtained. If it exceeds 400, the melt viscosity of the PHPE is too high, so it reduce a moldability.

PHPE preferably includes those obtained by polymerizing preferably from 0.5 to 50 mol%, more preferably 1 to 40 mol%, and most preferably 1.5 to 8 mol%, of the hydroxyl-containing phenol derivative of formula (IX) or (X) and preferably from 50 to 99.5 mol%, more preferably from 60 to 99 mol%, and most preferably from 92 to 98.5 mol%, of the phenol derivative of formula (XI). Particularly preferred are random copolymers comprising 2-[3-(2-hydroxyethylthio)propyl]-6-methylphenol (IX) or 2-(3-hydroxypropyl)-6-methylphenol (X) and 2,6-dimethylphenol (XI) at the above-recited copolymerization molar ratio, represented by formula (XII) or (XIII):

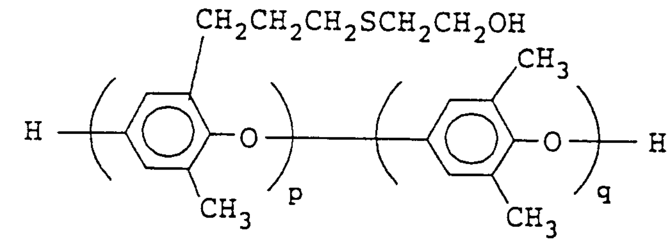

(XII)

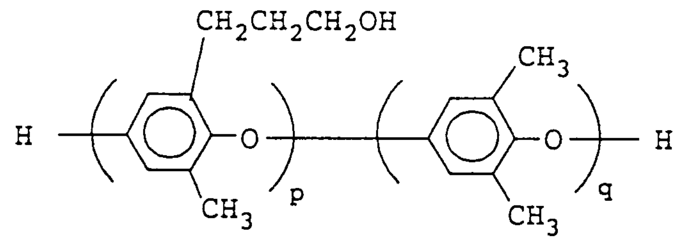

(XIII)

wherein $0.5 \leqq 100p/(p + q) \leqq 50$.

PHPE may also be prepared according to the process disclosed in JP-A-4-103629 in which a polyphenylene ether comprising a repeating unit containing a carbon-to-carbon double bond in the substituent thereof, i.e., a unit of formula:

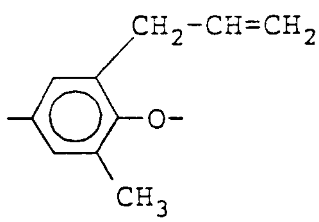

is reacted with a mercaptan having a hydroxyl group represented by formula:

$(HS)_m - R^1 - (OH)_n$

wherein m and n each represent an integer of from 1 to 4; and $R^1$ represents a di- to hexavalent saturated hydrocarbon group having from 1 to 20 carbon atoms, an aromatic group, or a hydrocarbon group containing an ether linkage, an amide linkage or an ester linkage.

Further, PHPE may be prepared by the process disclosed in JP-A-2-107634 (which corresponds to U.S. Patent 5,019,631). The process is for preparing an amorphous modified poly(2,6-dimethyl-p-oxyphenylene) having a glass transition temperature of from 180° to 220°C, on the average from 10 to 60% of said amorphous modified poly(2,6-dimethyl-p-oxyphenylene) comprising a repeating unit represented by formula (a) or (b):

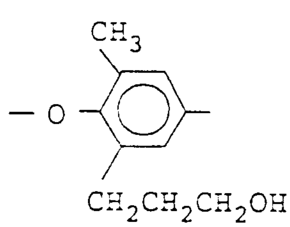

(a)

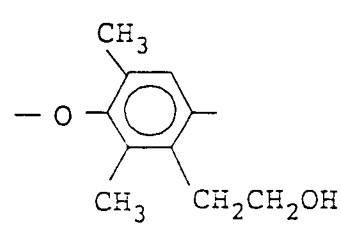

(b)

said process comprising (a) metalating poly(2,6-dimethyl-p-oxyphenylene) with a metalating agent selected from the group consisting of an alkaline metal alkyl ($C_1$-$C_{12}$), an alkaline metal hydride and an alkaline metal amide at a metalating agent to poly(2,6-dimethyl-p-oxyphenylene) molar rato of from 0.1:1 to 1:1 in an inert solvent at a temperature from -30° to 80°C for from 1 minute to 4 hours and (b) reacting the resulting metalated poly(2,6-dimethyl-p-oxyphenylene) with ethylene oxide in an amount at least equal to the amount of the alkaline metal of step (a) in an inert organic solvent at a temperature of from -30° to 80°C for from 5 minutes to 2 hours. From the working examples given in the publication, it appears that the resulting amorphous modified poly(2,6-dimethyl-p-oxyphenylene) has the following structural units:

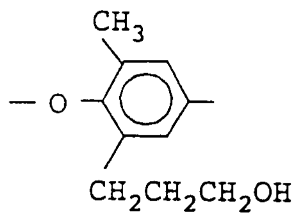

14.8 to 55.5 mol%

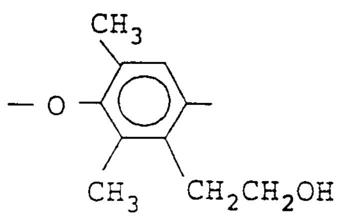

1.0 to 19.4 mol%

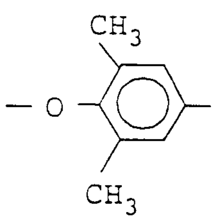

43.5 to 78.8 mol%

Total: 100 mol%

The functionalized olefin resin as component (B) is selected from (b-1) a carboxyl-modified olefin resin obtained by copolymerizing an unsaturated carboxylic acid or a derivative thereof with an olefin resin, comprising from 0.1 to 20 mol% of a carboxyl group unit derived from the unsaturated carboxylic acid, (b-2) a carboxyl-modified olefin copolymer which is obtained by copolymerizing from 70 to 99.9 mol% of at least one α-olefin having from 2 to 8 carbon atoms and from 0.1 to 30 mol% of at least one acyclic non-conjugated diene to form a crystalline olefin copolymer and grafting an unsaturated carboxylic acid or a derivative thereof to the crystalline olefin copolymer, and (b-3) a silyl-modified olefin resin containing a substituted silyl group represented by formula (V):

$-SiR_{\ell}Y_{(3-\ell)}$ (V)

wherein R represents an aliphatic hydrocarbon group; Y represents a hydrolyzable organic group or a hydroxyl group; and $\ell$ represents 0, 1, or 2.

Carboxyl-modified olefin resin (b-1) may be prepared by, for example, (i) a process comprising random-, block- or graft-copolymerization of a carboxyl-containing polymerizable monomer and an olefin resin, (ii) a process comprising reacting a functional group of an olefin resin with a compound containing a carboxyl group or a compound capable of forming a carboxyl group upon reacting, or (iii) a process comprising oxidative or hydrolytic modification of an olefin resin. In particular, a process utilizing graft copolymerization is favorable for the ease of introduction of a carboxyl group and control of the amount of a carboxyl group to be incorporated.

The carboxyl-containing polymerizable monomer which can be used in the above-described copolymerization process (i) includes unsaturated carboxylic acids, e.g., acrylic acid, maleic acid, fumaric acid, tetrahydrophthalic acid, itaconic acid, citraconic acid, crotonic acid, and isocrotonic acid, and derivatives thereof, i.e., an acid halide, an amide, an imide, an anhydride, and an ester, e.g., maleic acid chloride, maleimide, maleic anhydride, citraconic anhydride, monomethyl maleate, dimethyl maleate, and glycidyl maleate. Among them, acid anhydrides are preferred, with maleic anhydride being particularly preferred. These carboxylic acid monomers may be used either individually or in combination of two or more thereof.

Carboxyl-modified olefin resin (b-1) may be prepared by radical copolymerizing an olefin resin and the above-described unsaturated carboxylic acid or a derivative thereof under radical polymerization conditions.

The olefin resin of carboxyl-modified olefin resins (b-1) comprises at least one α-olefin having from 2 to 10 carbon atoms and preferably has a crystallinity of at least 10%, more preferably from 20% to 70%, at room temperature as measured by X-ray diffractometry, and a melting point of not less than 40 °C. The lower the crystallinity, the lower the modulus of elasticity of the resulting resin composition. The olefin resin, for example, a propylene resin preferably has a melt flow rate (MFR) of from 0.01 to 500 g/10 min, and more preferably from 0.05 to 100 g/10 min, as measured according to JIS K6758 and a modulus of elasticity of not less than 500 $kg/cm^2$ as measured according to JIS K7203.

Examples of suitable α-olefins constituting the olefin resin are ethylene, propylene, butene-1, pentene-1, hexene-1, 3-methylbutene-1, 4-methylpentene-1, 3,3-dimethylpentene-1, 3-methylhexene-1, 4-methylhexene-1, 4,4-dimethylhexene-1, 5-methylhexene-1, allylcyclopentane, allylcyclohexane, allylbenzene, 3-cyclohexylbutene-1, vinylcyclopropane, vinylcyclohexane, 2-vinylbicyclo-(2,2,1)-heptane, heptene-1, and octene-1. Among them, preferred α-olefins are ethylene, propylene, butene-1, pentene-1, hexene-1, 3-methylbutene-1, 4-methylpentene-1, and 3-methylhexene-1. More preferred are ethylene, propylene, butene-1, 3-methylbutene-1, or 4-methylpentene-1. These α-olefin monomers may be used either individually or in combination of two or more thereof.

The carboxyl-modified olefin copolymer (b-2) as component (B) is a polymer obtained by grafting the above-described polymerizable monomer containing a carboxyl group to a crystalline olefin copolymer.

The crystalline olefin copolymer is a copolymer obtained by reacting at least one α-olefin having from 2 to 8 carbon atoms and at least one acyclic non-conjugated diene represented by formula:

$$CH_2 = CH\text{-}(\text{-}CR^8R^7\text{-})_r\text{-}C(R^6) = C(R^5)\text{-}R^4$$

wherein $R^4$ represents an alkyl group having from 1 to 8 carbon atoms; $R^5$, $R^6$, $R^7$, and $R^8$ each represent a hydrogen atom or an alkyl group having from 1 to 8 carbon atoms; and r represents an integer of from 1 to 10. The diene is used from 0.1 to 30 mol%, and preferably from 0.5 to 15 mol% for preparing the olefin copolymer.

The crystalline olefin copolymer preferably has a crystallinity of at least 10%, more preferably from 20% to 70%, at room temperature as measured by X-ray diffractometry, and a melting point of not less than 40 °C. The lower the crystallinity, the lower the modulus of elasticity of the resulting resin composition. The olefin copolymer should have a sufficient molecular weight for maintaining mechanical strength at room temperature. For example, the copolymer mainly comprising propylene preferably has an MFR of from 0.01 to 500 g/10 min, and more preferably from 0.05 to 100 g/10 min, as measured according to JIS K6758 and a modulus of elasticity of not less than 500 $kg/cm^2$ as measured according to JIS K7203.

α-Olefins suitable for producing the olefin copolymer are ethylene, propylene, butene-1, pentene-1, hexene-1, 3-methylbutene-1, 4-methylpentene-1, 3,3-dimethylpentene-1, 3-methylhexene-1, 4-methylhexene-1, 4,4-dimethylhexene-1, 5-methylhexene-1, allylcyclopentane, allylcyclohexane, allylbenzene, 3-cyclohexylbutene-1, vinylcyclopropane, vinylcyclohexane, 2-vinylbicyclo-(2,2,2)-heptane, heptene-1, and octene-1. Preferred of them are ethylene, propylene, butene-1, pentene-1, hexene-1, 3-methylbutene-1, 4-methylpentene-1, and 3-methylhexene-1. More preferred are ethylene, propylene, butene-1, 3-methylbutene-1, or 4-methylpentene-1. These α-olefin monomers may be used either individually or in combination of two or more thereof.

The acyclic non-conjugated diene preferably includes those of the above formula wherein r is 5 or smaller; $R^7$ and $R^8$ are both hydrogen atoms; and $R^4$, $R^5$, and $R^6$ each represent a hydrogen atom or an alkyl group having from 1 to 4 carbon atoms, provided that all of them are not hydrogen atoms.

Examples of suitable diene monomers are 1,4-diene compounds, e.g., 4-methyl-1,4-hexadiene and 5-methyl-1,4-hexadiene; 1,5-diene compounds, e.g., 1,5-heptadiene, 1,5-octadiene, 5-methyl-1,5-heptadiene, and 6-methyl-1,5-heptadiene; 1,6-diene compounds, e.g., 1,6-octadiene, 6-methyl-1,6-octadiene, 7-methyl-1,6-octadiene, 2-methyl-1,6-octadiene, 6-methylidene-1-octene, 6-ethyl-1,6-octadiene, 7-dimethyl-1,6-octadiene, and 1,6-nonadiene; 1,7-diene compounds, e.g., 1,7-nonadiene, 7-methyl-1,7-nonadiene, and 8-methyl-1,7-nonadiene; and 1,8-diene compounds, e.g., 8-methyl-1,8-decadiene and 9-methyl-1,8-decadiene. Preferred of them are 4-methyl-1,4-hexadiene, 5-methyl-1,4-hexadiene, 5-methyl-1,5-heptadiene, 6-methyl-1,5-heptadiene, 6-methyl-1,6-octadiene, and 7-methyl-1,6-octadiene. These diene compounds may be used either individually or in combination of two or more thereof.

The crystalline olefin copolymer can be prepared by copolymerizing the above-described α-olefin and acyclic non-conjugated diene in the presence of a Ziegler-Natta catalyst in the same manner and using the same apparatus as used for production of α-olefin polymers. Known processes applicable to the production of the crystalline olefin copolymer to be modified are described, e.g., in JP-A-55-165907, JP-A-56-30414, JP-A-56-36508, and JP-A-57-155206.

The acyclic non-conjugated diene may be distributed in the copolymer either at random or in blocks. The content of the acyclic non-conjugated diene in the copolymer preferably ranges from 0.1 to 30 mol%, and more preferably from 0.5 to 15 mol%. If it is less than 0.1 mol%, the copolymer cannot attain a high degree of modification with the carboxyl-containing grafting monomer. If it exceeds 30 mol%, the rate of copolymerization is reduced, and by-production of low-crystalline polymer increases, resulting in a reduction in productivity. Besides the production problem, the copolymer with an excessive diene content tends to undergo side reactions, such as crosslinking among themselves or cleavage of molecules, upon modification, ultimately resulting in reduction in performance properties of the end product.

The silyl-modified olefin resin (b-3), modified with a silyl group having a hydrolyzable substituent, can be prepared typically by a process comprising graft copolymerizing an ethylenically unsaturated silane to the above-described olefin resin in the presence of a radical generator (refer to, e.g., JP-B-48-1711 or JP-A-59-36115) or a process comprising high-pressure radical copolymerization of ethylene and an ethylenically unsaturated silane and, if desired, a radical polymerizable monomer (refer to, e.g., JP-B-62-23777). These processes are not limitative, and other various processes, such as a process comprising reacting a maleic anhydride-modified olefin resin and γ-aminopropylenetrimethoxysilane, may also be used.

Silicon compounds as modifier include those having a reactive group capable of grafting to an olefin resin, those having a group reactive with a functional group introduced into an olefin resin, and those having a reactive group capable of copolymerizing with an olefin monomer. Included in these silicone compounds are compounds represented by formula (XIV):

$R'SiR_{\ell}Y_{(3-\ell)}$ (XIV)

wherein R' represents a group containing a carbon-to-carbon double bond, e.g., vinyl, allyl, isopropenyl, butenyl, cyclohexenyl, and γ-(meth)acryloyloxypropyl; R represents a hydrocarbon group, such as an alkyl group, e.g., methyl, ethyl, propyl, and decyl; Y represents a hydrolyzable organic group (e.g., a methoxy group, an ethoxy group, a formyloxy group, an acetoxy group, a propionyloxy group and an alkyl- or aryl-amino group) or a hydroxyl group; $\ell$ represents 0, 1 or 2.

Particularly preferred silicon compounds for modification are those represented by formula (XV):

$CH_2=CHSi(OA)_3$ (XV)

wherein A represents an alkyl group having from 1 to 8 carbon atoms.

Specific examples of the silicon compounds of formula (XV) are vinyltrimethoxysilane and vinyltriethoxysilane.

The olefin resin to be modified with the above-described silicon compound comprises at least one α-olefin having from 2 to 10 carbon atoms and preferably has a crystallinity of at least 10%, and more preferably from 20% to 70%, at room temperature as determined by X-ray diffractometry and has a melting point of not less than 40°C. The lower the crystallinity, the lower the modulus of elasticity of the resulting resin composition. The olefin resin should have a sufficient molecular weight for maintaining the resinous properties at room temperature. For example, the olefin resin mainly comprising propylene preferably has an MFR of from 0.01 to 500 g/10 min, and more preferably from 0.05 to 100 g/10 min, as measured according to JIS K6758 and a modulus of elasticity of not less than 500 kg/cm$^2$ as measured according to JIS K7203.

The radical reaction can be carried out by any of a process comprising irradiating an olefin resin and a polymerizable monomer with γ-rays, electron rays, etc., a process comprising irradiating an olefin resin and then adding a polymerizable monomer thereto, and a process comprising heating an olefin resin and a polymerizable monomer in the presence or absence of a radical generator. The reaction system may have a dissolved state, a molten state, or a suspended state.

Examples of suitable radical generators include organic or inorganic peroxides, e.g., benzoyl peroxide, t-butyl peroxybenzoate, t-butyl hydroperoxide, t-butyl peroxyacetate, diisopropyl peroxydicarbonate, 2,2-bis-(t-butylperoxy)octane, methyl ethyl ketone peroxide, potassium peroxide, and hydrogen peroxide; and azo compounds, e.g., $\alpha,\alpha'$-azobisisobutyronitrile. The peroxide may be used in combination with a reducing agent to form a redox system. For example, hydrogen peroxide may be combined with a ferrous salt. A proper radical generator is selected from among them in relation to a modifier or a reaction mode selected. These radical generators may be used either individually or in combination of two or more thereof.

The radical generator is used in an amount usually of from 0 to 100 parts by weight, and preferably from 0 to 30 parts by weight, per 100 parts by weight of the olefin resin.

The graft copolymerization is carried out usually at a temperature of from 30° to 350°C, and preferably from 50° to 300°C, for a period usually of not more than 50 hours, and preferably of from 1 minute to 24 hours.

The content of the substituted silyl group in the silyl-modified olefin resin (b-3) ranges from 0.1 to 5% by weight, and preferably from 0.1 to 3% by weight. If it exceeds 5% by weight, a silanol condensation reaction takes place during kneading of the composition to cause crosslinking, and the resulting composition tends to have reduced moldability and reduced dynamic strength. If it is less than 0.1% by weight, the effect of improving compatibility would be small.

The functionalized olefin resin as component (B) may contain an unmodified crystalline olefin resin, e.g., polyethylene and polypropylene.

From the standpoint of a balance of mechanical strength, moldability, and solvent resistance, a weight ratio of component (A) to component (B) ranges generally from 10:90 to 90:10, preferably from 20:80 to 80:20, and more preferably from 30:70 to 70:30. If the proportion of component (A) is less than 10% by weight (based on the total amount of components (A) and (B)), the effect of improving heat resistance and rigidity of an olefin resin would be small. If it exceeds 90% by weight (based on the total amount of components (A) and (B)), the effect of improving moldability and solvent resistance of PPE would be small.

If desired, the part of component (A) may be replaced with other additional resin components such as unmodified PPE (e.g., poly(2,6-dimethyl-1,4-phenylene ether)), or polystyrene, with the proviso that the replaced amount is in the range of 80% or less by weight of the amount of component (A).

If desired, the thermoplastic resin composition may further contain from 0.5 to 20 parts by weight of compounding additives, such as antioxidants, weathering agents, nucleating agents, flame retarders, plasticizers, flow modifiers, and so on. The composition may furthermore contain from 10 to 50 parts by weight of organic or inorganic fillers, e.g., glass fiber, mica, talc, wollastonite, potassium titanate, calcium carbonate, and silica, and from 0.5 to 5 parts by weight of a dispersing agent for colorants. In addition, it is effective to add from 5 to 30 parts by weight of an impact modifiers, e.g., a styrene-butadiene copolymer rubber or a hydrogenation product thereof, an ethylene-propylene copolymer rubber, an ethylene-propylene-diene copolymer rubber, the above-described copolymer rubbers modified with an $\alpha,\beta$-unsaturated carboxylic acid anhydride, an unsaturated glycidyl ester or an unsaturated glycidyl ether, and a copolymer of an unsaturated epoxy compound and an ethylenenically unsaturated compound. The unit "parts by weight" as used herein means "parts by weight per 100 parts of the total amount of the above-described resin components".

Each of the above-described additives may be used either individually or in combinations of two or more.

The thermoplastic resin composition of the present invention may be obtained through melt kneading, which may be conducted by a conventional kneading method used for thermoplastic resins. For example, the resinous components, which may be powdery or granular, can be uniformly mixed together with, any desired additive ingredients by a mixing means, such as a Henschel mixer, ribbon blender, or V-shaped blender and then kneaded with a kneading means, such as a single-screw or multi-screw extruder, roller mill, or Banbury mixer.

Shaping methods for the thus-produced thermoplastic resin composition of the present invention are not particularly limited, and conventional thermoplastic resin molding or forming techniques, such as injection molding, blow molding, extrusion, sheet forming, thermoforming, laminating, or press molding may be used.

The present invention is now illustrated in greater detail with reference to Reference Examples and Examples, but it should be understood that the present invention is not construed as being limited thereto. All the parts, percents and ratios are by weight unless otherwise indicated.

In Examples and Comparative Examples, the following materials were used.

<u>PPE:</u>

Poly(2,6-dimethyl-1,4-phenylene ether) having an intrinsic viscosity of 0.31 dℓ/g as measured in chloroform at 30 ° C (product of Nippon Polyether Co., Ltd.; hereinafter referred to as PPE H-30).

Unmodified Olefin Resin:

Polypropylene "MITSUBISHI POLYPRO MA3" (produced by Mitsubishi Petro-Chemical Co., Ltd.; MFR (at 230 ° C, according to JIS K7210): 10 g/10 min). Hereinafter referred to as PP.

High-density polyethylene "MITSUBISHI POLYETHY EY40L" (produced by Mitsubishi Petro-Chemical Co., Ltd.; MFR (at 190 ° C): 1 g/10 min). Hereinafter referred to as PE-40L.

Low-density polyethylene "MITSUBISHI POLYETHY ZF-60" (produced by Mitsubishi Petro-Chemical Co., Ltd.; MFR (at 190 ° C): 1 g/10 min). Hereinafter referred to as PE-ZF.

Carboxyl-Modified Olefin Resin:

Maleic anhydride-modified polypropylene "MODIC Q-95113" (produced by Mitsubishi Petro-Chemical Co., Ltd.; maleic anhydride content: 0.6%; MFR (at 230 ° C, according to JIS K7210): 13 g/10 min). Hereinafter referred to as COOH-modified PP.

Maleic anhydride-modified high-density polyethylene "MODIC SM05011" (produced by Mitsubishi Petro-Chemical Co., Ltd; maleic anhydride content: 1.0%; MFR (at 190 ° C, according to JIS K6758): 0.8 g/10 min). Hereinafter referred to as COOH-modified PE.

Other materials used in Examples and Comparative Examples were prepared in Reference Examples hereinafter described.

REFERENCE EXAMPLE 1

Synthesis of 2-[3-(2-Hydroxyethylthio)propyl]-6-methylphenol

In 785 parts of ethanol were dissolved 496 parts of 2-allyl-6-methylphenol and 392 parts of 2-mercaptoethanol in a nitrogen atmosphere. To the solution was added dropwise 1600 parts of a 1.9% ethanol solution of 2,2'-azobisisobutyronitrile at a refluxing temperature to conduct a reaction for 10 hours. After ethanol was removed in an evaporator, the residue was heated to 110 ° C in vacuo to remove the unreacted 2-mercaptoethanol and by-produced 2-hydroxyethyl disulfide to obtain the titled compound. $^1$H-NMR analysis revealed that the rate of reaction of the allyl group was about 100% and the reaction selectivity was about 100%.

REFERENCE EXAMPLE 2

Synthesis of PHPE-1

In 2890 parts of xylene and 766 parts of methanol were dissolved 111 parts of the 2-[3-(2-hydroxyethylthio)propyl]-6-methylphenol prepared in Reference Example 1, 949 parts of 2,6-dimethylphenol, and 9.1 parts of sodium hydroxide. Then, 20.5 parts of diethanolamine, 12.6 parts of dibutylamine, and 0.48 part of manganese chloride tetrahydrate dissolved in 316 parts of methanol were added to the solution in this order. A polymerization reaction was conducted in two divided stages. The former stage polymerization was carried out by introducing oxygen gas into the reaction system at a rate of 0.8 ℓ/min while maintaining the system at 40 ° C until a solid began to precipitate. The latter stage polymerization was effected by introducing 0.8 ℓ/min of oxygen gas and 8 ℓ/min of nitrogen gas while maintaining the system at 30 ° C until precipitation of a polymer ceased. The resulting polymer was washed with methanol rendered acidic with hydrochloric acid to deactivate the catalyst to obtain a hydroxy-substituted poly(phenylene ether) resin in a yield of 93%. The resulting resin was designated PHPE-1.

PHPE-1 had a hydroxyl content of 4.6 mol%, a number average molecular weight (Mn) of 14930, and a Q value (a ratio of weight average molecular weight (Mw) to number average molecular weight (Mn), indicative of molecular weight distribution) of 2.79. The hydroxyl group content was calculated from the integrated intensity of the signals assigned to the methylene group having bonded thereto a hydroxyl group in the vicinity of 3.6 ppm in the $^1$H-NMR spectrum and expressed in terms of mol% based on the number of the phenylene repeating units in the main chain. Mn and Q value were obtained by gel-permeation chromatography (GPC) and reduced to polystyrene.

REFERENCE EXAMPLE 3

Synthesis of PHPE-2

PHPE-2 was prepared in the same manner as in Reference Example 2, except for using 55.5 parts of the 2-[3-(2-hydroxyethylthio)propyl]-6-methylphenol prepared in Reference Example 1, 970 parts of 2,6-dimethylphenol, 9.1 parts of sodium hydroxide, 20.5 parts of diethanolamine, and 0.48 part of manganese chloride tetrahydrate. The reaction results were as follows.

| | |
|---|---|
| Yield: | 91% |
| OH content: | 1.5 mol% |
| Mn: | 10300 |
| Q value: | 1.81 |

REFERENCE EXAMPLE 4

Synthesis of PHPE-3

PHPE-3 was prepared in the same manner as in Reference Example 2, except for using 148.3 parts of the 2-[3-(2-hydroxyethylthio)propyl]-6-methylphenol prepared in Reference Example 1 and 921 parts of 2,6-dimethylphenol. The reaction results were as follows.

| | |
|---|---|
| Yield: | 87% |
| OH content: | 4.9 mol% |
| Mn: | 5620 |
| Q value: | 1.84 |

REFERENCE EXAMPLE 5

Synthesis of PHPE-4

PHPE-4 was prepared in the same manner as in Reference Example 2, except for dissolving 74 parts of 2-[3-(2-hydroxyethylthio)propyl]-6-methylphenol prepared in Reference Example 1, 960 parts of 2,6-dimethylphenol, and 20 parts of sodium hydroxide in 2890 parts of xylene and 766 parts of methanol and then adding thereto 40 parts of diethanolamine, 12.6 parts of dibutylamine, and 0.96 part of manganese chloride tetrahydrate dissolved in 316 parts of methanol in this order. The reaction results were as follows.

| | |
|---|---|
| Yield: | 90% |
| OH content: | 2.4 mol% |
| Mn: | 9950 |
| Q value: | 1.84 |

REFERENCE EXAMPLE 6

Synthesis of 2-(3-Hydroxypropyl)-6-methylphenol

In 391 parts of pyridine was dissolved 49.1 parts of 2-allyl-6-methylphenol in a nitrogen atmosphere, and 47.3 parts of trimethylchlorosilane was added thereto dropwise at room temperature, followed by allowing the mixture to react for 1 hours. After completion of the reaction, the reaction mixture was washed with pure water to remove by-produced pyridine hydrochloride and the unreacted trimethylchlorosilane and then extracted with diethyl ether. The extract was subjected to distillation under reduced pressure to obtain 2-allyl-6-methylphenoxytrimethylsilane (b.p. 7 mmHg/101 ° C).

In anhydrous tetrahydrofuran (THF) was dissolved 42.7 parts of the product in a nitrogen stream, and 86.2 parts of a 1 mol/ℓ THF solution of borane at 5 ° C was added thereto dropwise, followed by allowing the mixture to react at 20 ° C for 1 hour. To the reaction mixture were added 1.5 parts of pure water and then 45 parts of a 10% sodium hydroxide aqueous solution. Forty parts of a 30% hydrogen peroxide aqueous solution was added thereto dropwise at 40 ° C, followed by further reacting at 50 ° C for 1 hour. The reaction mixture was extracted with diethyl ether to recover the titled compound in a yield of 38% based on 2-allyl-6-methylphenol.

REFERENCE EXAMPLE 7

Synthesis of PHPE-5

In 2890 parts of xylene and 766 parts of methanol were dissolved 27 parts of the 2-(3-hydroxypropyl)-6-methylphenol prepared in Reference Example 6, 980 parts of 2,6-dimethylphenol, and 9.1 parts of sodium hydroxide. Then, 20.5 parts of diethanolamine, 12.6 parts of dibutylamine, and 0.48 part of manganese chloride tetrahydrate dissolved in 316 parts of methanol were added to the solution in this order. A polymerization reaction was conducted in two divided stages. The former stage polymerization was carried out by introducing oxygen gas into the reaction system at a rate of 0.8 ℓ/min while maintaining the system at 40 °C until a solid began to precipitate. The latter stage polymerization was effected by introducing 0.8 ℓ/min of oxygen gas and 8 ℓ/min of nitrogen gas while maintaining the system at 30 °C until precipitation of a polymer ceased. The resulting polymer was washed with methanol rendered acidic with hydrochloric acid to deactivate the catalyst to obtain a hydroxy-substituted poly(phenylene ether) resin, designated PHPE-5. The reaction results were as follows.

Yield: 93%
OH content: 1.3 mol%
Mn: 10950
Mw: 21200 (determined by GPC, converted to polystyrene)

REFERENCE EXAMPLE 8

Synthesis of PHPE-6

PHPE-6 was prepared in the same manner as in Reference Example 7, except for using 82 parts of the phenol derivative prepared in Reference Example 6 and 940 parts of 2,6-dimethylphenol. The reaction results were as follows.

Yield: 90%
OH content: 4.0 mol%
Mn: 6800
Mw: 13400

REFERENCE EXAMPLE 9

Synthesis of PHPE-7

In 1000 parts of anhydrous THF was dissolved 50 parts of poly(2,6-dimethylphenylene ether) (Mn: 15000) by heating in a nitrogen atmosphere. The solution was kept at 25 °C, and 14 parts of n-butyl lithium (1.6 mol/ℓ hexane solution) was added thereto, followed by allowing the mixture to react for 30 minutes. Then, 4 parts of ethylene oxide was introduced therein under pressure, and the mixture was reacted for 1 hour. The reaction mixture was poured into methanol, and the precipitate was washed with methanol and water to obtain a modified PPE, designated as PHPE-7. The reaction results were as follows.

Polymer recovery: 78%
OH content: 3.2 mol%
Mn: 11000

REFERENCE EXAMPLE 10

Synthesis of PHPE-8

2,6-Dimethylphenol and 2-allyl-6-methylphenol were copolymerized in the presence of a catalyst system consisting of manganese chloride, diethanolamine, dibutylamine, and sodium hydroxide to obtain a PPE having an allyl group in the side chain thereof. The resulting PPE had an Mn of 13000 and an allyl group content of 4 mol%.

In 430 parts of toluene were dissolved 50 parts of the resulting PPE and 20 parts of 2-mercaptoethanol, and 4 parts of azobisisobutyronitrile dissolved in 173 parts of toluene was added thereto dropwise over 1.5 hours while maintaining at 85 °C. After the addition, the mixture was further allowed to react at 85 °C for an additional period of 4 hours. The reaction mixture was poured into acetonitrile to precipitate a hydroxyl-modified PPE, designated PHPE-8. PHPE-8 had an OH content of 2.3 mol% and an Mn of 16000.

REFERENCE EXAMPLE 11

Synthesis of PHPE-9

In 449 parts of anhydrous THF was dissolved 50 parts of the same allyl-containing PPE as used in Reference Example 10, and 74 parts of a 0.5 mol/ℓ THF solution of 9-borabicyclo-[3.3.1]nonane was added thereto dropwise at 50°C, followed by allowing the mixture to react for 2 hours. Twenty-four parts of a 10% sodium hydroxide aqueous solution was added thereto, and 20 parts of a 30% hydrogen peroxide aqueous solution was further added thereto dropwise, followed by allowing the mixture to react at 50°C for 2 hours. The reaction mixture was poured into methanol to precipitate a hydroxyl-modified PPE, designated PHPE-9. PHPE-9 had an OH content of 3.5 mol% and an Mn of 15000.

REFERENCE EXAMPLE 12

Synthesis of Comparative Modified PPE

In a 1 ℓ-volume stainless steel autoclave were charged 500 mℓ of xylene and 50 g of PPE H-30, and the mixture was stirred to dissolve PPE H-30. Two grams of ethylene oxide was introduced into the solution under pressure, and the mixture was allowed to react at 150°C for 5 hours. The reaction mixture was poured into methanol, and the precipitated polymer was collected by filtration and dried to obtain hydroxyl-modified PPE in which 84% of the terminal phenolic hydroxyl group of PPE formed an adduct with ethylene oxide. The resulting hydroxyl-modified PPE H-30 was simply referred to as modified PPE. The modified PPE had an Mn of 11000 and a Q value of 2.0.

REFERENCE EXAMPLE 13

Synthesis of COOH-Modified Olefin Copolymer-1

In a 10 ℓ-volume glass-made flask equipped with a stirrer whose atmosphere had been thoroughly displaced with nitrogen were charged 250 parts of a propylene/7-methyl-1,6-octadiene random copolymer (experimentally prepared by Mitsubishi Petro-Chemical Co., Ltd.; 7-methyl-1,6-octadiene content: 2 mol%; crystallinity: 46.5% (X-ray diffractometry); MFR: 2 g/10 min) and 250 parts of maleic anhydride. Five liters of chlorobenzene were added thereto, and the mixture was heated at 110°C with stirring to form a solution. To the solution was added dropwise 0.6 part of benzoyl peroxide dissolved in 500 mℓ of chlorobenzene over 2 hours. After the dropwise addition, the mixture was further allowed to react at 110°C for 3 hours. The reaction mixture was poured into 15 ℓ of acetone, and the precipitate was collected by filtration. The same solvent reprecipitation was repeated once more. The solid was dried under reduced pressure to obtain a carboxyl-modified olefin copolymer, designated as COOH-modified olefin copolymer-1, having a maleic anhydride content of 4.8% as measured by infrared spectroscopy and an MFR of 3.1 g/10 min.

REFERENCE EXAMPLE 14

Synthesis of COOH-Modified Olefin Copolymer-2

COOH-Modified olefin copolymer-2 was prepared by pelletizing a mixture of 100 parts of the same propylene/7-methyl-1,6-octadienecopolymer as used in Reference Example 13 and 10 parts of maleic anhydride in a twin-screw extruder "TEX 30" manufactured by Nippon Steel Works, Ltd. at 220°C and 300 rpm. The resulting pellets had a maleic anhydride content of 4.1% as measured by infrared spectroscopy and an MFR of 3.8 g/10 min.

REFERENCE EXAMPLE 15

Synthesis of Silyl-Modified PP

A hundred parts of powdered isotactic polypropylene having a density of 0.90 g/cm$^3$ and an MFI (melt flow index) of 0.2 g/10 min, 0.5 part of benzoyl peroxide, 3 parts of vinyltrimethoxysilane, and 0.2 part of tetrakis(methylene-3-(3,5-di-t-butyl-4-hydroxyphenyl)propionate)methane as an antioxidant were dry blended in a mixing machine for 2 minutes. The blend was melt-kneaded in an extruder (diameter: 40 mm, L/D ratio:

23) at 210 °C to obtain a silane-grafted polypropylene, designated silyl-modified PP, having an MFI of 10.5 g/10 min and a vinyltrimethoxysilane content of 2.6%.

REFERENCE EXAMPLE 16

Synthesis of Silyl-Modified PE

High-density polyethylene having a density of 0.94 g/cm$^3$ and an MFI of 1.0 g/10 min was silyl-modified in the same manner as in Reference Example 15 to obtain silyl-modified PE having a MFI of 1.4 g/10 min and a vinylmethoxysilane content of 2.5%.

EXAMPLES 1 TO 7 AND COMPARATIVE EXAMPLES 1 TO 7

The components shown in Table 1 were kneaded in "Labo Plastomill" manufactured by Toyo Seiki Seisaku-sho, Ltd. at 280 °C and 180 rpm for 5 minutes, followed by grinding. The resulting particulate thermoplastic resin composition was evaluated according to the following test methods. The results obtained are shown in Table 1.

(1) Bending Modulus:

The resin composition was press molded by means of a hydraulic press molding machine manufactured by Toyo Seiki Seisaku-sho, Ltd. at 260 °C to obtain a 2 mm thick sheet. The sheet was cut to obtain a specimen of 15 mm in width and 80 mm in length. A cantilever bending modulus at 23 °C at a bending angle of 10° was measured according to JIS K7106.

(2) Impact Strength:

A 31.5 mm long, 6.2 mm wide and 3.2 mm thick test specimen was prepared by injection molding at 260 °C by means of an injection molding machine "CS-183 MMX MINIMAX" produced by Custom Scientific Co. An unnotched Izod impact strength at 23 °C was measured by means of an Izod impact tester "MINIMAX CS-138T1 Model" manufactured by Custom Scientific Co.

(3) Disperse Texture:

A cut piece of the specimen prepared in (2) above was subjected to ion etching and then observed under a scanning electron microscope "S-2400 Model" manufactured by Hitachi, Ltd. to measure the diameter of the dispersed particles.

TABLE 1

| | Example No. | | | | | | | Comparative Example No. | | | | | | |
|---|---|---|---|---|---|---|---|---|---|---|---|---|---|---|
| | 1 | 2 | 3 | 4 | 5 | 6 | 7 | 1 | 2 | 3 | 4 | 5 | 6 | 7 |
| Composition (wt%): | | | | | | | | | | | | | | |
| PHPE-1 | 50 | - | - | - | - | - | 50 | - | - | - | - | - | - | - |
| PHPE-2 | - | 50 | - | 30 | 70 | - | - | - | - | - | 95 | 5 | - | - |
| PHPE-3 | - | - | 50 | - | - | 25 | - | - | - | 50 | - | - | - | - |
| Modified PPE | - | - | - | - | - | - | - | - | - | - | - | - | 50 | - |
| PPE H-30 | - | - | - | - | - | 25 | - | 50 | 50 | - | - | - | - | 50 |
| COOH-Modified PP | 50 | 50 | 50 | 50 | 30 | 50 | - | - | 50 | - | 5 | 95 | 50 | - |
| COOH-Modified PE | - | - | - | - | - | - | 50 | - | - | - | - | - | - | - |
| PP | - | - | - | 20 | - | - | - | 50 | - | 50 | - | - | - | - |
| PE-40L | - | - | - | - | - | - | - | - | - | - | - | - | - | 50 |
| Evaluation: | | | | | | | | | | | | | | |
| Bending Modulus ($kg/cm^2$) | 15000 | 14200 | 15200 | 13600 | 16100 | 14300 | 11800 | 14000 | 14200 | 13900 | 19000 | 12000 | 14400 | 10200 |
| Izod Impact Strength (unnotched) ($kg \cdot cm/cm^2$) | 9.6 | 9.2 | 8.1 | 12.0 | 13.3 | 9.3 | 38.5 | 5.2 | 6.7 | 4.1 | 4.0 | 21.4 | 7.0 | 22.6 |
| Dispersed Particle Diameter (μm) | 1-5 | 2-10 | 1-5 | 2-10 | 2-7 | 2-10 | 1-10 | ≥100 | 20-100 | ≥100 | 0.5-2 | 2-7 | 2-10 (partly 100) | ≥100 |

EXAMPLES 8 TO 12 AND COMPARATIVE EXAMPLES 8 TO 10

The components shown in Table 2 below were melt kneaded in Labo Plastomill at 260 °C and 180 rpm for 10 minutes, followed by grinding.

Test specimens were prepared in the same manner as in Example 1, except for changing the molding temperature to 280 ° C, and evaluated in the same manner as in Example 1, except for Izod impact strength was measured on both notched and unnotched specimens (notch radius: 0.25 mm; depth: 0.32 mm). The results of evaluation are shown in Table 2.

TABLE 2

| | Example 8 | Example 9 | Example 10 | Example 11 | Example 12 | Compar. Example 8 | Compar. Example 9 | Compar. Example 10 |
|---|---|---|---|---|---|---|---|---|
| Composition (wt%): | | | | | | | | |
| PHPE-1 | 40 | - | - | 20 | 40 | - | 95 | 5 |
| PHPE-2 | - | 40 | - | - | - | - | - | - |
| PHPE-3 | - | - | 40 | - | - | - | - | - |
| PPE H-30 | - | - | - | 20 | - | 40 | - | - |
| COOH-Modified Olefin Copolymer-1 | 60 | 60 | 60 | 60 | - | - | 5 | 95 |
| COOH-Modified Olefin Copolymer-2 | - | - | - | - | 60 | - | - | - |
| PP | - | - | - | - | - | 60 | - | - |
| Evaluation: | | | | | | | | |
| Bending Modulus ($kg/cm^2$) | 11900 | 12000 | 12400 | 12000 | 12200 | 13500 | 20200 | 7500 |
| Izod Impact Strength ($kg \cdot cm/cm^2$): | | | | | | | | |
| Unnotched | 15.7 | 15.2 | 7.0 | 14.6 | 15.0 | 6.8 | 5.6 | 58 |
| Notched | 4.1 | 4.0 | 2.0 | 3.8 | 4.0 | 1.2 | 2.0 | 12.2 |
| Dispersed PPE Particle Size (μm) | 0.5-1 | 1-2 | 0.5-1.5 | 0.7-1.5 | 0.7-2 | 30-50 | 0.5 | 0.5 |

EXAMPLES 13 TO 18 AND COMPARATIVE EXAMPLES 11 TO 17

The components shown in Table 3 below were melt kneaded in Labo Plastomill at 280°C and 180 rpm for 5 minuets, followed by grinding.

Test specimens were prepared and evaluated in the same manner as in Example 1. The results of evaluation are shown in Table 3.

TABLE 3

| | Example No. | | | | | | Comparative Example No. | | | | | | |
|---|---|---|---|---|---|---|---|---|---|---|---|---|---|
| | 13 | 14 | 15 | 16 | 17 | 18 | 11 | 12 | 13 | 14 | 15 | 16 | 17 |
| Composition (wt%): | | | | | | | | | | | | | |
| PHPE-5 | 50 | - | - | 30 | 70 | - | - | - | - | 95 | 5 | - | - |
| PHPE-6 | - | 50 | 25 | - | - | 50 | - | - | 50 | - | - | - | - |
| Modified PPE | - | - | - | - | - | - | - | - | - | - | - | 50 | - |
| PPE H-30 | - | - | 25 | - | - | - | 50 | 50 | - | - | - | - | 50 |
| COOH-Modified PP | 50 | 50 | 50 | 50 | 30 | - | - | 50 | - | 5 | 95 | 50 | - |
| COOH-Modified PE | - | - | - | - | - | 50 | - | - | - | - | - | - | - |
| PP | - | - | - | 20 | - | - | 50 | - | 50 | - | - | - | - |
| PE-40L | - | - | - | - | - | - | - | - | - | - | - | - | 50 |
| Evaluation: | | | | | | | | | | | | | |
| Bending Modulus ($kg/cm^2$) | 14600 | 15200 | 14200 | 13800 | 15800 | 12000 | 14000 | 14200 | 13800 | 19200 | 11700 | 14400 | 10200 |
| Izod Impact Strength (unnotched) ($kg \cdot cm/cm^2$) | 10.6 | 11.6 | 10.2 | 12.5 | 11.8 | 35.4 | 5.2 | 6.7 | 3.8 | 5.0 | 21.4 | 7.0 | 22.6 |
| Dispersed Particle Size (μm) | 1-10 | 1-5 | 2-10 | 2-10 | 2-10 | 1-10 | ≥100 | 20-100 | ≥100 | 0.2-1 | 2-10 | 2-10 (partly 100) | ≥100 |

EXAMPLES 19 TO 21

The components shown in Table 4 below were melt kneaded in Labo Plastomill at 280°C and 180 rpm for 5 minuets, followed by grinding.

Test specimens were prepared and evaluated in the same manner as in Example 1. The results of evaluation are shown in Table 4.

TABLE 4

| | Example 19 | Example 20 | Example 21 |
|---|---|---|---|
| Composition (wt%): | | | |
| PHPE-7 | 50 | - | - |
| PHPE-8 | - | 50 | - |
| PHPE-9 | - | - | 50 |
| COOH-Modified PP | 50 | 50 | 50 |
| Evaluation: | | | |
| Bending Modulus ($kg/cm^2$) | 14200 | 14600 | 14800 |
| Izod Impact Strength ($kg \cdot cm/cm^2$) | 6.8 | 8.5 | 12.3 |
| Dispersed Particle Size (μm) | 2-10 | 2-10 | 1-5 |

EXAMPLES 22 TO 28 AND COMPARATIVE EXAMPLES 18 TO 21

The components shown in Table 5 below were melt kneaded in Labo Plastomill at 280 °C and 180 rpm for 5 minuets, followed by grinding.

Test specimens were prepared in the same manner as in Example 1, and impact strength and disperse texture were evaluated in the same manner as in Example 1. Further, the specimen prepared for the measurement of Izod impact strength was observed to evaluate delamination and appearance and rated as follows.

| | |
|---|---|
| Good | No problem for practical use |
| Medium | Improvement needed |
| Poor | Extremely defective |

The results of evaluation are shown in Table 5.

TABLE 5

| | Example No. | | | | | | | Comparative Example No. | | | |
|---|---|---|---|---|---|---|---|---|---|---|---|
| | 22 | 23 | 24 | 25 | 26 | 27 | 28 | 18 | 19 | 20 | 21 |
| Composition (wt%): | | | | | | | | | | | |
| PHPE-1 | 50 | - | - | - | - | 50 | 80 | - | - | - | - |
| PHPE-2 | - | 50 | - | 30 | 70 | - | - | - | - | - | - |
| PHPE-3 | - | - | 25 | - | - | - | - | - | - | 50 | - |
| PPE H-30 | - | - | 25 | - | - | - | - | 50 | 50 | - | 50 |
| Silyl-Modified PP | 50 | 50 | 50 | 50 | 30 | - | - | - | 50 | - | - |
| Silyl-Modified PE | - | - | - | - | - | 50 | 20 | - | - | - | - |
| PP | - | - | - | 20 | - | - | - | 50 | - | 50 | - |
| PE-40L | - | - | - | - | - | - | - | - | - | - | 50 |
| Evaluation: | | | | | | | | | | | |
| Izod Impact Strength (unnotched) ($kg \cdot cm/cm^2$) | 12.5 | 11.1 | 6.8 | 19.6 | 9.8 | 40.0 | 36 | 5.2 | 5.8 | 2.5 | 22.6 |
| Dispersed Particle Size (μm) | 1-10 | 1-10 | 2-10 | 1-5 | 1-10 | 2-10 | 1-5 | ≥100 | ≥50 | ≥100 | ≥100 |
| Appearance | good | good | good | good | good | good | good | poor | poor | poor | poor |

## EXAMPLES 29 TO 35 AND COMPARATIVE EXAMPLES 22 TO 25

The components shown in Table 6 below were melt kneaded in Labo Plastomill at 280 °C and 180 rpm for 5 minuets, followed by grinding.

Test specimens were prepared and evaluated in the same manner as in Example 22. The results of evaluation are shown in Table 6.

TABLE 6

| | Example No. | | | | | | | Comparative Example No. | | | |
|---|---|---|---|---|---|---|---|---|---|---|---|
| | 29 | 30 | 31 | 32 | 33 | 34 | 35 | 22 | 23 | 24 | 25 |
| Composition (wt%): | | | | | | | | | | | |
| PHPE-5 | 50 | - | - | 30 | 70 | - | - | - | - | - | - |
| PHPE-6 | - | 50 | 25 | - | - | 50 | 80 | - | - | 50 | - |
| PPE H-30 | - | - | 25 | - | - | - | - | 50 | 50 | - | 50 |
| Silyl-Modified PP | 50 | 50 | 50 | 50 | 30 | - | - | - | 50 | - | - |
| Silyl-Modified PE | - | - | - | - | - | 50 | 20 | - | - | - | - |
| PP | - | - | - | 20 | - | - | - | 50 | - | 50 | - |
| PE-40L | - | - | - | - | - | - | - | - | - | - | 50 |
| Evaluation: | | | | | | | | | | | |
| Izod Impact Strength (unnotched) (kg·cm/cm$^2$) | 9.8 | 10.9 | 7.2 | 15.2 | 10.4 | 38.2 | 30.5 | 5.2 | 5.8 | 3.8 | 22.6 |
| Dispersed Particle Size (μm) | 1-10 | 1-5 | 2-10 | 1-5 | 2-8 | 1-10 | 1-5 | ≥100 | ≥50 | ≥100 | ≥100 |
| Appearance | good | good | good | good | good | good | good | poor | poor | poor | poor |

While the invention has been described in detail and with reference to specific examples thereof, it will be apparent to one skilled in the art that various changes and modifications can be made therein without

departing from the spirit and scope thereof.

**Claims**

1. A thermoplastic resin composition comprising (A) from 10 to 90 % by weight of a hydroxy-substituted poly(phenylene ether) resin comprising p units of a repeating unit represented by formula (I):

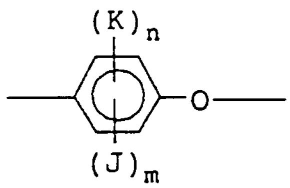

(I)

wherein m represents an integer of from 1 to 4; n represents an integer of from 0 to 3; the sum of m and n is not greater than 4; J represents $(HO)_a$-$R^1$-S-$R^2$-, wherein a represents an integer of from 1 to 6; $R^1$ represents a halogen-substituted or unsubstituted polyvalent aliphatic hydrocarbon group having from 1 to 20 carbon atoms which may contain an oxygen atom in the carbon chain thereof or a halogen-substituted or unsubstituted polyvalent aromatic hydrocarbon group; and $R^2$ represents an alkylene group having from 2 to 20 carbon atoms; when m is 2 or more, the plural J groups may be the same or different; K represents a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms; and when n is 2 or more, the plural K groups may be the same or different,
and q units of a repeating unit represented by formula (II):

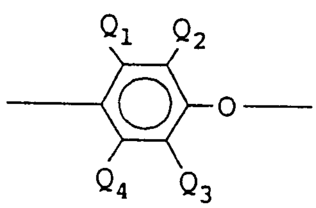

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, and having a number average degree of polymerization (p + q) of from 25 to 400, with p and q satisfying formula:

$$0.2 \leqq 100p/(p + q) \leqq 100$$

and (B) from 10 to 90% by weight of an olefin resin having a functional group selected from a carboxyl group and a silyl group.

2. A thermoplastic resin composition as claimed in Claim 1, wherein component (A) is a copolymer comprising from 0.5 to 50 mol% of a repeating unit represented by formula (III):

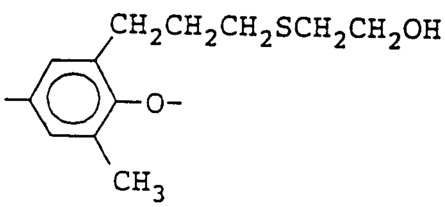

(III)

and from 50 to 99.5 mol% of a repeating unit represented by formula (IV):

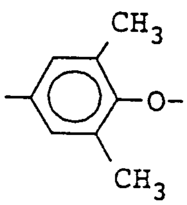

(IV)

3. A thermoplastic resin composition as claimed in Claim 1, wherein component (A) is a copolymer comprising from 1 to 40 mol% of a repeating unit represented by formula (III):

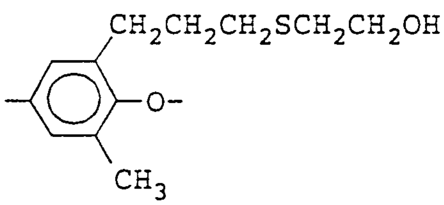

(III)

and from 60 to 99 mol% of a repeating unit represented by formula (IV):

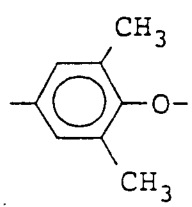

(IV)

4. A thermoplastic resin composition as claimed in Claim 1, wherein component (A) is a copolymer comprising from 1.5 to 8 mol% of a repeating unit represented by formula (III):

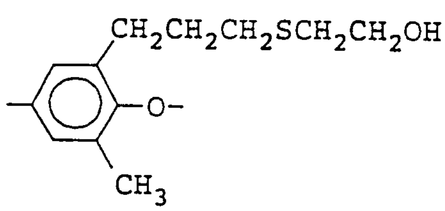

(III)

and from 92 to 98.5 mol% of a repeating unit represented by formula (IV):

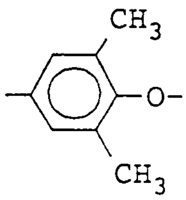

(IV)

**5.** A thermoplastic resin composition as claimed in Claim 1, wherein component (B) is a carboxyl-modified olefin resin obtained by copolymerizing an unsaturated carboxylic acid with an olefin resin, containing from 0.1 to 20 mol% of a carboxyl group unit derived from said unsaturated carboxylic acid.

**6.** A thermoplastic resin composition as claimed in Claim 5, wherein said unsaturated carboxylic acid or a derivative thereof is maleic anhydride.

**7.** A thermoplastic resin composition as claimed in Claim 5, wherein said olefin resin is polypropylene.

**8.** A thermoplastic resin composition as claimed in Claim 1, wherein component (B) is a carboxyl-modified olefin copolymer which is obtained by copolymerizing from 70 to 99.9 mol% of at least one α-olefin having from 2 to 8 carbon atoms and from 0.1 to 30 mol% of at least one acyclic non-conjugated diene to form a crystalline olefin copolymer and grafting an unsaturated carboxylic acid or a derivative thereof to the crystalline olefin copolymer.

**9.** A thermoplastic resin composition as claimed in Claim 8, wherein said crystalline olefin copolymer is a propylene/7-methyl-1,6-octadiene random copolymer.

**10.** A thermoplastic resin composition as claimed in Claim 8, wherein said derivative of an unsaturated carboxylic acid is maleic anhydride.

**11.** A thermoplastic resin composition as claimed in Claim 1, wherein component (B) is a silyl-modified olefin resin containing a substituted silyl group represented by formula (V):

$-SiR_{\ell}Y_{(3-\ell)}$ (V)

wherein R represents an aliphatic hydrocarbon group; Y represents a hydrolyzable organic group or a hydroxyl group; and $\ell$ represents 0, 1, or 2.

**12.** A thermoplastic resin composition as claimed in Claim 11, wherein said silyl-modified olefin resin is vinyltrimethoxysilane-grafted polypropylene.

**13.** A thermoplastic resin composition comprising (A) from 10 to 90% by weight of a hydroxy-substituted poly(phenylene ether) resin comprising p units of a repeating unit represented by formula (VI):

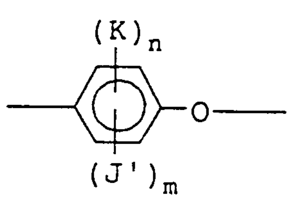

(VI)

wherein m represents an integer of from 1 to 4; n represents an integer of from 0 to 3; the sum of m and n is not greater than 4; J' represents $-R^3-(OH)_a$, wherein a represents an integer of from 1 to 6, and $R^3$ represents a polyvalent aliphatic hydrocarbon group having from 1 to 20 carbon atoms which may contain an oxygen atom in the carbon chain thereof and may have a substituent on the side chain thereof or a polyvalent aromatic hydrocarbon group; when m is 2 or more, the plural J' groups may be

the same or different; K represents a hydrogen atom, a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms; and when n is 2 or more, the plural K groups may be the same or different,

and q units of a repeating unit represented by formula (II):

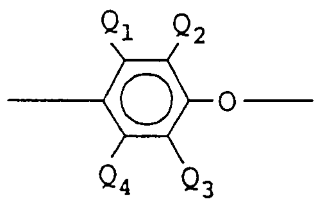

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, and having a number average degree of polymerization (p + q) of from 25 to 400, with p and q satisfying formula:

$0.2 \leqq 100p/(p + q) \leqq 100$

and (B) from 10 to 90% by weight of an olefin resin having a functional group selected from a carboxyl group and a silyl group.

**14.** A thermoplastic resin composition as claimed in Claim 13, wherein component (A) is a copolymer comprising from 0.5 to 50 mol% of a repeating unit represented by formula (VII):

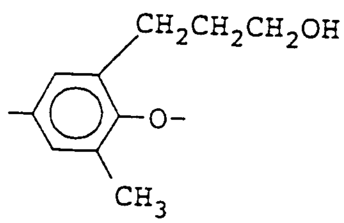

(VII)

and from 50 to 99.5 mol% of a repeating unit represented by formula (IV):

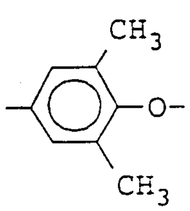

(IV)

**15.** A thermoplastic resin composition as claimed in Claim 13, wherein component (A) is a copolymer comprising from 1 to 40 mol% of a repeating unit represented by formula (VII):

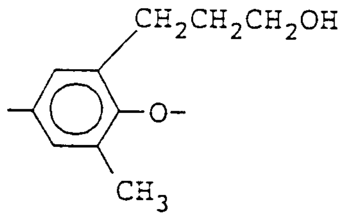

(VII)

and from 60 to 99 mol% of a repeating unit represented by formula (IV):

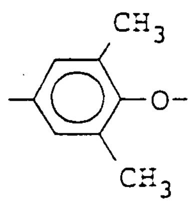

(IV)

**16.** A thermoplastic resin composition as claimed in Claim 13, wherein component (A) is a copolymer comprising from 1.5 to 8 mol% of a repeating unit represented by formula (VII):

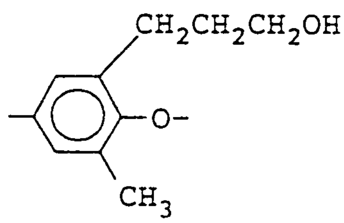

(VII)

and from 92 to 98.5 mol% of a repeating unit represented by formula (IV):

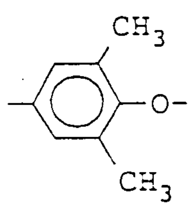

(IV)

**17.** A thermoplastic resin composition as claimed in Claim 13, wherein component (B) is a carboxyl-modified olefin resin obtained by copolymerizing an unsaturated carboxylic acid with an olefin resin, containing from 0.1 to 20 mol% of a carboxyl group unit derived from said unsaturated carboxylic acid.

**18.** A thermoplastic resin composition as claimed in Claim 17, wherein said derivative of an unsaturated carboxylic acid is maleic anhydride.

**19.** A thermoplastic resin composition as claimed in Claim 17, wherein said olefin resin is polypropylene.

**20.** A thermoplastic resin composition as claimed in Claim 13, wherein component (B) is a carboxyl-modified olefin copolymer which is obtained by copolymerizing from 70 to 99.9 mol% of at least one α-olefin having from 2 to 8 carbon atoms and from 0.1 to 30 mol% of at least one acyclic non-conjugated

diene to form a crystalline olefin copolymer and grafting an unsaturated carboxylic acid or a derivative thereof to the crystalline olefin copolymer.

**21.** A thermoplastic resin composition as claimed in Claim 20, wherein said crystalline olefin copolymer is a propylene/7-methyl-1,6-octadiene random copolymer.

**22.** A thermoplastic resin composition as claimed in Claim 20, wherein said derivative of an unsaturated carboxylic acid is maleic anhydride.

**23.** A thermoplastic resin composition as claimed in Claim 13, wherein component (B) is a silyl-modified olefin resin containing a substituted silyl group represented by formula (V):

$-SiR_{\ell}Y_{(3-\ell)}$ (V)

wherein R represents an aliphatic hydrocarbon group; Y represents a hydrolyzable organic group or a hydroxyl group; and $\ell$ represents 0, 1, or 2.

**24.** A thermoplastic resin composition as claimed in Claim 23, wherein said silyl-modified olefin resin is vinyltrimethoxysilane-grafted polypropylene.

**25.** A thermoplastic resin composition comprising (A) from 10 to 90% by weight of a hydroxy-substituted poly(phenylene ether) resin comprising from 0.5 to 60 mol% of a repeating unit represented by formula (VII):

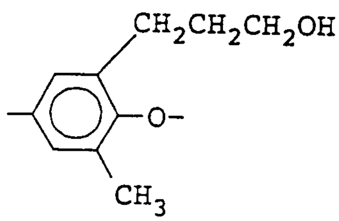

(VII)

from 0.5 to 20 mol% of a repeating unit represented by formula (VIII):

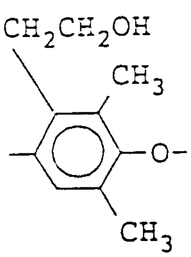

(VIII)

and from 20 to 99 mol% of a repeating unit represented by formula (IV):

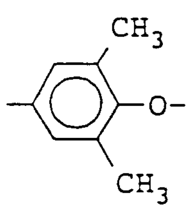

(IV)

and (B) from 10 to 90% by weight of an olefin resin having a functional group selected from a carboxyl

group and a silyl group.